# EUROPEAN PATENT APPLICATION

(11) **EP 2 813 911 A1**
(43) Date of publication of application: **17.12.2014**
(21) Application number: 13171817.3
(22) Date of filing: 13.06.2013
(51) Int. Cl.: G05B 19/4065, B66B 5/00

(54) **Door monitoring**

(71) Applicant: ASSA ABLOY AB, 107 23 Stockholm (SE)
(72) Inventor: Holmström, Ingemar, 192 56 Sollentuna (SE)
(74) Representative: Wihlsson, Joakim Per Magnus

(57) **Abstract**

The operational status of a door assembly is monitored by a sensor chain (110, 120, 130, 140) arranged to register at least one test signal (S) reflecting vibrations and/or movements generated in the door assembly during an operation sequence for the door. A memory unit (160) stores a digital representation of at least one reference signal (S_{ref}) describing an operation sequence for the door wherein the door assembly has a satisfactory functional quality. A data processing unit (150) compares the at least one test signal (S) with the at least one reference signal (S_{ref}); and if an alarm criterion is fulfilled, causes an alarm signal (A) to be generated. A logging interface (157a, 157b) is operatively connected with the sensor chain (110, 120, 130, 140), such that at least one test signal (S) corresponding to a satisfactory door-assembly function can be forwarded to the memory unit (160) for storage therein as a representation of the at least one reference signal (S_{ref}).

## Description

### THE BACKGROUND OF THE INVENTION AND PRIOR ART

The present invention relates generally to solutions for accomplishing reliable and efficient maintaining procedures for doors and locks. More particularly the invention relates to a system for monitoring the operational status of a door assembly according to the preamble of claim 1 and a corresponding method according to the preamble of claim 10. The invention also relates to a computer program product according to claim 16 and a computer readable medium according to claim 17.

Today's janitorial services focus mainly on efficiency and reliability. On one hand, no single item in a building should be allowed degrade to a non-functioning state. On the other hand, for cost-efficiency, one should avoid servicing items prematurely. Balancing these criteria is a challenging task. In the light of this, the present invention aims at optimizing the maintenance of the doors and locks of a building, or a group of buildings.

US 2011/0016971 describes a door assembly, which includes a first door skin and a second door skin spaced apart from the first door skin. The assembly further includes an accelerometer generating an energy signature signal and a memory storing a door component operating signature. A controller is coupled to the accelerometer and forms a comparison of the energy signature signal to the door component operating signature and generates a door component operation status signal in response to the comparison. It is thus convenient to determine whether or not a door with a fire-resistance rating is in compliance with a security code concerning this type of doors.

### PROBLEMS ASSOCIATED WITH THE PRIOR ART

Consequently, an automatic solution is known for identifying a door assembly with components in need of servicing. However, the known solution is exclusively applicable to doors having very specific characteristics, namely doors whose operating signatures are stored in advance in the memory linked to the controller. For fire doors delivered directly from the factory and mounted in a prescribed type of frame this may provide a satisfying solution. However, for most other types of doors, the known monitoring system cannot be applied.

### SUMMARY OF THE INVENTION

The object of the present invention is therefore to solve the above problem, and thus offer a flexible means for determining whether or not a given door, its accessories and/or its lock mechanisms requires servicing.

According to one aspect of the invention, the object is achieved by the initially described system, wherein the system contains a logging interface in operative connection with the sensor chain. The logging interface is configured to forward the at least one test signal to the memory unit for storage therein as a representation of the at least one reference signal.

This system is advantageous because the memory unit may record reference signals from any door assembly that has a satisfactory functional quality. This recording may then be used for later reference to determine whether or not the door assembly operates as intended. By door assembly is here understood the combination of a door and its accessories, such as its hardware and closing devices and their anchors; including the doorframe and its anchors.

According to one preferred embodiment of this aspect of the invention, the data processing unit comprises a comparison module, which is configured to compare the at least one test signal with the at least one reference signal. The comparison module is further configured to check if the at least one test signal is within a similarity range from the at least one reference signal. For a more complex analysis, the comparison module is preferably configured to execute a pattern recognition procedure to effect the comparison and to check if the test signal(s) is/are within the similarity range from the at least one reference signal. Hence, also minor deviations can be detected at an early enough stage to avoid a future breakdown in the door assembly and/or the lock mechanism.

According to another preferred embodiment of this aspect of the invention, the data processing unit contains a switching module configured to forward a signal received from the sensor chain to either the memory unit or the comparison module. Thereby, in an initial phase, a reference signal can be fed into the memory; and in a subsequent steady-state operation, a test signal can be fed into the data processing unit for comparison with this reference signal.

According to yet another preferred embodiment of this aspect of the invention, the logging interface is included in the data processing unit. The data processing unit is further configured to transform the at least one reference signal before it is stored in the memory unit. This is beneficial because it enables storing reference signals in a compact format (e.g. as mathematical representations). In addition to economizing storage space, this may enhance the speed and/or reduce the overall processing demand.

According to still another preferred embodiment of this aspect of the invention, the data processing unit is configured to transform the at least one reference signal into at least one frequency-domain representation before storage in the memory unit. The memory unit may thereby store the at least one frequency-domain representation, and the data processing unit is configured to transform the at least one test signal into the frequency domain and compare the thus converted signal with the at least one stored frequency-domain representation of the reference signal. Consequently, the alarm criterion may be tested in the frequency domain, which facilitates identifying periodic patterns in the registered vibrations and/or movements. Alternatively, the at least one stored frequency-domain representation of the reference signal may instead be re-transformed into the time domain before making the comparison.

According to a further preferred embodiment of this aspect of the invention, the sensor chain contains at least one sensor element configured to register the altering of a position, a velocity and/or an acceleration in at least one spatial dimension. In other words, displacements, the first and/or second time derivative of displacements are detected. Thereby, essentially all types of mechanic influencing of the door assembly and its various mechanisms can be registered and tested. For example, velocity data by integrating an acceleration signal from an accelerometer.

According to another preferred embodiment of this aspect of the invention, the sensor chain further includes an amplifier circuit, a filter circuit and/or an analog-to-digital converter. The amplifier circuit is configured to receive at least one signal registered by the sensor element; and in response thereto, produce at least one corresponding amplified signal. The filter circuit is configured to receive at least one representation of the at least one test signal (before and/or after digital conversion); and in response thereto, produce at least one corresponding filtered signal, such as a low or band pass filtered version thereof. The analog-to-digital converter is configured to receive at least one analog representation of the at least one test signal; and in response thereto, produce at least one corresponding digital signal. Such a sensor chain is advantageous because it enables storing and processing of the door vibration and/or movement data in an efficient and reliable manner.

According to another aspect of the invention, the object is achieved by the method described initially, wherein prior to registering the at least one test signal, the method involves storing at least one initial test signal as a representation of the at least one reference signal. The advantages of this method, as well as the preferred embodiments thereof, are apparent from the discussion above with reference to the proposed system.

According to a further aspect of the invention the object is achieved by a computer program product, which is loadable into the memory of a computer, and includes software adapted to implement the method proposed above when said computer program product is run on a computer.

According to another aspect of the invention the object is achieved by a computer readable medium, having a program recorded thereon, where the program is to control a computer to perform the method proposed above when the program is loaded into the computer.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a block diagram over a system according to one embodiment of the invention; and
- Figure 2: illustrates, by means of a flow diagram, the general method according to the invention.

### DESCRIPTION OF PREFERRED EMBODIMENTS OF THE INVENTION

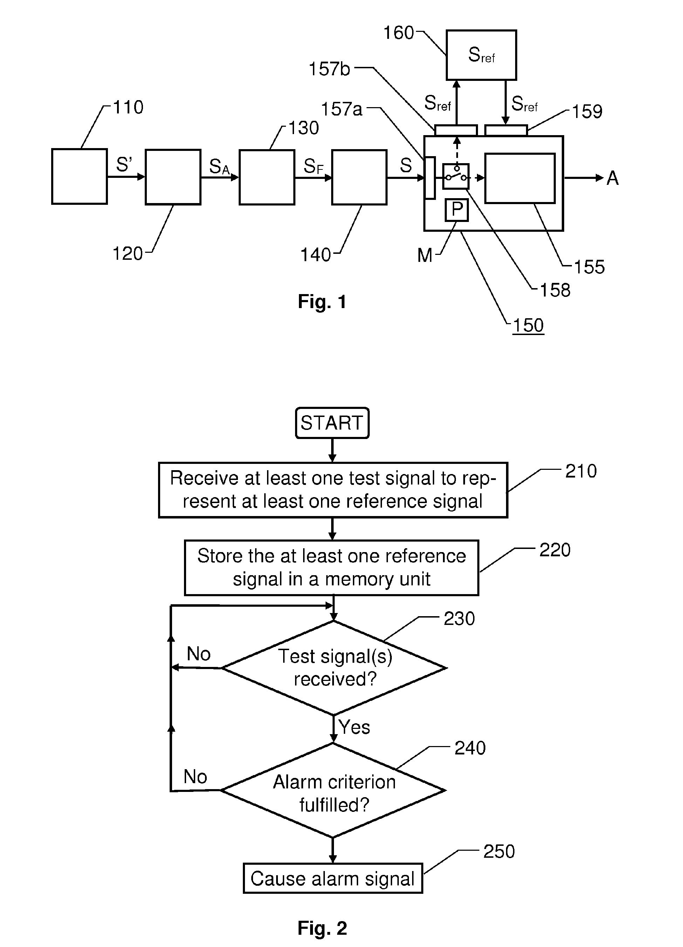

Initially, we refer to Figure 1, which shows a block diagram over a system for monitoring an operational status of a door assembly (not shown) according to one embodiment of the invention.

The system includes a sensor chain, a memory unit 160 and a data processing unit 150.

The sensor chain is arranged to register at least one test signal S reflecting vibrations and/or movements generated in the door assembly during an operation sequence for the door. To this aim, the sensor chain contains at least one sensor element 110, e.g. an accelerometer configured to register a displacement, a velocity and/ or an acceleration, or after integration, a velocity S' in at least one spatial dimension. The at least one sensor element 110 is arranged somewhere in or near the door assembly, such as in the door itself and/or in its accessories.

The memory unit 160 is configured to store a digital representation of at least one reference signal S_{ref}, which describes an operation sequence for the door when the door assembly has a satisfactory functional quality.

The data processing unit 150 and the memory unit 160 may either be arranged locally at a given door, or at a central position, and for example monitor two or multiple doors.

The data processing unit 150 (e.g. implemented by a microprocessor or a micro controller unit, MCU) is configured to compare the at least one test signal S with the at least one reference signal S_{ref} stored in the memory unit 160. The data processing unit 150 may include a comparison module 155 (e.g. implemented in software), which is configured to compare the at least one test signal S with the at least one reference signal S_{ref}. Specifically, the comparison may involve checking if the at least one test signal S is within a similarity range from the at least one reference signal S_{ref}. If the comparison shows that an alarm criterion is fulfilled, the data processing unit 150 is configured to cause an alarm signal A to be generated in respect of the tested door assembly. Preferably, the alarm signal A also designates which type of failure that is most likely to occur given the specific difference between S and S_{ref}.

The proposed system comprises a logging interface in operative connection with the sensor chain. In Figure 1, the logging interface is represented by a first interface portion 157a towards the sensor chain and a second interface portion 157b towards the memory unit 160, where the first interface portion 157a is configured to feed any received test signals S into the data processing unit 150 and the second interface portion 157b is configured to forward the test signals S from the data processing unit 150 to the memory unit 160. Thus, a test signal S originating from the sensor element 110 may conveniently be conveyed either to the data processing unit 150 for further processing, or directly into the memory unit 160 for storage therein as a representation of the at least one reference signal S_{ref}. According to one preferred embodiment of the invention, the data processing unit 150 includes a switching module 158 (e.g. implemented in software) configured to effect this function. Namely, such a switching function is desirable, since, according to the invention, before the system is set in steady-state operation, the at least one reference signal S_{ref} is recorded as at least one test signal S from a door assembly that has a satisfactory functional quality.

The door, in turn, may be any type of door, e.g. manually or automatically operated, sliding vertically/horizontally, swinging, revolving or folding. Further, the test and reference signals S and S_{ref} respectively may reflect anything from a complete door opening and closing sequence including unlocking and locking to a single sub step in such a sequence, e.g. operating a particular lock function.

According to one preferred embodiment of the invention, the above-mentioned comparison module 155 is configured to execute a pattern recognition procedure (e.g. implemented by a neural network) to compare the at least one test signal S with the at least one reference signal S_{ref}, and check if the at least one test signal S is within a similarity range from the at least one reference signal S_{ref}. This is especially useful if the test and reference signals S and S_{ref} are multi-dimensional and relatively complex.

In the embodiment of the invention shown in Figure 1, the data processing unit 150 includes the first and second portions 157a and 157b respectively of the logging interface. In some implementations, e.g. when the storage space and/or the processing resources are comparatively scarce, it is further preferable if the data processing unit 150 is configured to transform the at least one reference signal S_{ref} before storing it in the memory unit 160. This means that the at least one reference signal S_{ref} also passes one or more processing cores before leaving the second portion 157b of the logging interface.

Namely, if the at least one reference signal S_{ref} is converted into at least one mathematical representation, this data may be stored on a very efficient format, basically as y=c+kx or y=sinα. In practice, an actual reference signal S_{ref} often needs to be approximated by two or more different mathematical representations, one for each of two or more segments of the signal. In such a case, the data processing unit 150 is configured to also convert the at least one test signal S adequately, and then compare the at least one test signal S with the at least one mathematical representation of the at least one reference signal S_{ref} stored in the memory unit 160. Naturally, the opposite approach can instead be applied, i.e. converting the reference signal S_{ref} before making the comparison.

Alternatively, the data processing unit 150 may be configured to transform the at least one reference signal S_{ref} into at least one frequency-domain representation before storage in the memory unit 160. Further, the memory unit 160 is configured to store such frequency-domain representations, and the data processing unit 150 is configured to convert the at least one test signal S into the frequency domain and compare the frequency domain-representation of the at least one test signal S with the at least one frequency-domain representation of the reference signal S_{ref} stored in the memory unit 160. Analogous to the above, this may involve various conversions, either of the incoming test signal S, the stored reference signals S_{ref} or both, for example by applying discrete Fourier transform (DFT) algorithms and/or inverse DFT algorithms.

Testing the alarm criterion in the frequency domain is generally preferable if the testing aims at identifying periodic patterns in the registered vibrations and/or movements represented by the at least one test signal S.

In an implementation of the invention, the sensor chain preferably contains at least one sensor element 110 that is configured to register position changes, velocities and/or accelerations S' in at least one spatial dimension. In addition thereto, it is desirable if the sensor chain includes an amplifier circuit 120 configured to receive at least one signal S' registered by at least one sensor element 110. In response to the at least one signal S', the amplifier circuit 120 is configured to produce at least one corresponding amplified signal S_{A}. Namely, the original sensor signal(s) S' may have a relatively low power level.

Moreover, the sensor chain preferably contains one or more filter circuits 130 and an analog-to-digital converter 140. A filter circuit 130 may be included on the analog side (as in Figure 1) and be configured to receive at least one representation S_{A} of the at least one test signal S', and in response thereto, produce at least one corresponding filtered signal S_{F}, e.g. low or band pass filtered. Naturally, various forms of filters may likewise be included on the digital side, i.e. after the analog-to-digital converter 140.

The analog-to-digital converter 140 is configured to receive at least one representation S_{F} of the at least one test signal S' (e.g. a filtered ditto), and in response thereto, produce at least one corresponding digital signal S, which may be fed into the data processing unit 150, either directly, or via one or more filter circuits 130.

It should be noted that, according to the invention, the sensor chain may contain elements in addition to the units mentioned above. Moreover, two or more elements in the sensor chain may be co-arranged with one another, or integrated into one another, e.g. the sensor element 110 and the amplifier circuit 120.

Of course, the existence of the above-described sensor element 110 does not preclude that the door assembly is also associated with other types of sensors for registering data in addition to vibrations and/or movements, or that the sensor element 110 as such is combined with these types of sensors.

Preferably, the data processing unit 150 contains, or is in communicative connection with a memory unit M storing a computer program product P, which contains software for controlling the data processing unit 150 to perform the above-described actions when the computer program product P is run on the data processing unit 150.

In order to sum up, we will now describe the general method of monitoring an operational status of a door assembly according to the invention with reference to the flow diagram in Figure 2.

In a first step 210, at least one test signal S is received, which represents the at least one reference signal S_{ref}. In other words, one or more test signals S are fed into the system in respect of a door assembly whose function is known to be satisfying. A step 220 then stores the at least one received test signal S in a memory unit, possibly in the form of a mathematical or a frequency-domain representation.

Thereafter, it is presumed that a steady-state operation phase is entered. Here, a step 230 checks if at least one test signal S is received, and if so, a step 240 follows. Otherwise the procedure loops back and stays in step 230, waiting for any operation of the door assembly and/or the lock. Alternatively, the procedure may wait for an interrupt, e.g. from a lock in the door.

In step 240, the at least one test signal S is compared with the at least one stored digital representation of at the least one reference signal S_{ref} to check whether or not an alarm criterion is fulfilled, for example because the at least one test signal S is outside of a similarity range from the at least one reference signal S_{ref}. If the alarm criterion is fulfilled, a step 250 follows. Otherwise, the procedure loops back and stays in step 240 for continued testing.

Step 240 generates an alarm signal A indicating an expected future malfunction in the door assembly from which the at least one test signal S was received. Preferably, the alarm signal A also specifies which type of failure that is most likely to occur given the specific difference between S and S_{ref}.

All of the process steps, as well as any sub-sequence of steps, described with reference to Figure 2 above may be controlled by means of a programmed computer apparatus. Moreover, although the embodiments of the invention described above with reference to the drawings comprise a computer apparatus and processes performed in a computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/ Versatile Disk), a CD (Compact Disc) or a semiconductor ROM, an EP-ROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A system for monitoring an operational status of a door assembly, the system comprising:
a sensor chain (110, 120, 130, 140) arranged to register at least one test signal (S) reflecting vibrations and/or movements generated in the door assembly during an operation sequence for the door;
a memory unit (160) configured to store a digital representation of at least one reference signal (S_{ref}) describing an operation sequence for the door wherein the door assembly has a satisfactory functional quality; and
a data processing unit (150) configured to:
compare the at least one test signal (S) with the at least one reference signal (S_{ref}); and if an alarm criterion is fulfilled,
cause an alarm signal (A) to be generated,
**characterized in that** the system comprises a logging interface (157a, 157b) in operative connection with the sensor chain (110, 120, 130, 140), the logging interface (157a, 157b) being configured to forward the at least one test signal (S) to the memory unit (160) for storage therein as a representation of the at least one reference signal (S_{ref}).

2. The system according to claim 1, wherein the data processing unit (150) comprises a comparison module (155) configured to: compare the at least one test signal (S) with the at least one reference signal (S_{ref}), and
check if the at least one test signal (S) is within a similarity range from the at least one reference signal (S_{ref}).

3. The system according to claim 2, wherein the comparison module (155) is configured to execute a pattern recognition procedure to: compare the at least one test signal (S) with the at least one reference signal (S_{ref}), and check if the at least one test signal (S) is within a similarity range from the at least one reference signal (S_{ref}).

4. The system according to any one of claims 2 or 3, wherein the data processing unit (150) comprises a switching module (158) configured to forward a signal (S, S_{ref}) received from the sensor chain (110, 120, 130, 140) to either the memory unit (160) or the comparison module (155).

5. The system according to any one of the preceding claims, wherein the data processing unit (150) includes the logging interface (157a, 157b), and the data processing unit (150) is configured to transform the at least one reference signal (S_{ref}) before storage thereof in the memory unit (160).

6. The system according to claim 5, wherein the data processing unit (150) is configured to convert the at least one reference signal (S_{ref}) into at least one mathematical representation before storage in the memory unit (160), the memory unit (160) is configured to store the at least one mathematical representation, and the data processing unit (150) is configured to convert the test signal (S) or the at least one reference signal (S_{ref}), and compare the at least one test signal (S) with the at least one mathematical representation of the at least one reference signal (S_{ref}) stored in the memory unit (160).

7. The system according to claim 5, wherein the data processing unit (150) is configured to transform the at least one reference signal (S_{ref}) into at least one frequency-domain representation before storage in the memory unit (160), the memory unit (160) is configured to store the at least one frequency-domain representation, and the data processing unit (150) is configured to convert the test signal (S) or the at least one reference signal (S_{ref}), and compare the at least one test signal (S) with the at least one frequency-domain representation of the reference signal (S_{ref}) stored in the memory unit (160).

8. The system according to any one of the preceding claims, wherein the sensor chain (110, 120, 130, 140) comprises at least one sensor element configured to register at least one of the altering of a position, a velocity and an acceleration in at least one spatial dimension.

9. The system according to claim 8, wherein the sensor chain (110, 120, 130, 140) further comprises at least one of:
an amplifier circuit (120) configured to receive at least one signal (S') registered by the sensor element (110), and in response thereto, produce at least one corresponding amplified signal (S_{A}),
a filter circuit (130) configured to receive at least one representation (S_{A}) of the at least one test signal (S'), and in response thereto, produce at least one corresponding filtered signal (S_{F}), and
an analog-to-digital converter (140) configured to receive at least one analog representation (S_{F}) of the at least one test signal (S'), and in response thereto, produce at least one corresponding digital signal (S).

10. A method of monitoring an operational status of a door assembly, the method comprising:
registering at least one test signal (S) reflecting vibrations and/or movements generated in the door assembly during an operation sequence for the door;
comparing the at least one test signal (S) with at least one stored digital representation of at least one reference signal (S_{ref}) describing an operation sequence for the door wherein the door assembly has a satisfactory functional quality; and if an alarm criterion is fulfilled,
generating an alarm signal (A),
**characterized by**, prior to registering the at least one test signal (S), storing at least one initial test signal (S) as a representation of the at least one reference signal (S_{ref}).

11. The method according to claim 10, wherein comparing the at least one test signal (S) with at least one stored digital representation of at least one reference signal (S_{ref}) involves:
comparing the at least one test signal (S) with the at least one reference signal (S_{ref}), and
checking if the at least one test signal (S) is within a similarity range from the at least one reference signal (S_{ref}).

12. The method according to claim 11, wherein comparing the at least one test signal (S) with the at least one reference signal (S_{ref}), and checking if the at least one test signal (S) is within a similarity range from the at least one reference signal (S_{ref}) involves executing a pattern recognition procedure.

13. The method according to any one of the claims 10 to 12, further comprising transforming the at least one reference signal (S_{ref}) before storage thereof in the memory unit (160).

14. The method according to claim 13, comprising converting the at least one reference signal (S_{ref}) into at least one mathematical representation, thereafter storing the at least one mathematical representation, and after conversion of the test signal (S) or the at least one reference signal (S_{ref}), comparing any incoming test signal (S) with the at least one stored mathematical representation of the at least one reference signal (S_{ref}).

15. The method according to claim 13, comprising transforming the at least one reference signal (S_{ref}) into at least one frequency-domain representation, thereafter storing the at least one frequency-domain representation, and after conversion of the test signal (S) or the at least one reference signal (S_{ref}), comparing any incoming test signal (S) with the at least one frequency-domain representation of the at least one reference signal (S_{ref}).

16. A computer program product (P) loadable into the memory (M) of a computer, comprising software for controlling the steps of any of the claims 9 to 15 when the computer program product is run on the computer.

17. A computer readable medium (M), having a program recorded thereon, where the program is to make a computer control the steps of any of the claims 9 to 15.
